# EUROPEAN PATENT SPECIFICATION

(11) **EP 1 403 559 B1**
(45) Date of publication and mention of the grant of the patent: **03.05.2006**
(21) Application number: 03103518.1
(22) Date of filing: 23.09.2003
(51) Int. Cl.: F16H 59/00, B60K 17/00, F16H 63/38, F16H 63/14

(54) **Variable speed gear for internal combustion engines**
Zahnräderwechselgetriebe für Verbrennungsmotoren
Variateur de vitesse pour moteurs à combustion

(30) Priority: 24.09.2002 JP 2002276925
(43) Date of publication of application: 31.03.2004
(73) Proprietor: HONDA GIKEN KOGYO KABUSHIKI KAISHA, Minato-ku, Tokyo (JP)
(72) Inventor: Kambe, Takashi, 4-1, Chuo 1-chome, Wako-Shi SAITAMA (JP); Ozeki, Takashi, 4-1, Chuo 1-chome, Wako-Shi SAITAMA (JP); Takahashi, Akira, 4-1, Chuo 1-chome, Wako-Shi SAITAMA (JP); Higashi, Yasuhiro, 4-1, Chuo 1-chome, Wako-Shi SAITAMA (JP)
(74) Representative: Poulin, Gérard

(56) References cited:
- EP-A- 1 090 797
- GB-A- 2 359 119
- PATENT ABSTRACTS OF JAPAN vol. 0050, no. 64 (P-059), 30 April 1981 (1981-04-30) -& JP 56 014325 A (YAMAHA MOTOR CO LTD), 12 February 1981 (1981-02-12)

## Description

### [Detailed Description of the Invention]

### [Technical Field of the Invention]

The present invention relates to a variable speed gear for an internal combustion engine mounted on a vehicle, and, more specifically, to a variable speed gear for an internal combustion engine, including a gear power transmission device, a shift fork, and a shift drum, wherein speed is changed by rotating the shift drum via a change spindle.

### [Description of the Related Art]

In a shift drum type variable speed gear in the related art, the center of rotation of a stopper roller of a gear change' mechanism is not on an extension of a line connecting the center of rotation of a change spindle and the center of rotation of a shift drum. Therefore, when changing the gear, a shifting load exerted when upshifting differs from a shifting load exerted when downshifting, which gives a driver a sense of discomfort. This is obvious when a bearing is not used at a position where the shift drum is rotatably supported. In order to resolve the aforementioned sense of discomfort, a ball bearing has been used at the position where the shift drum is rotatably supported (See Patent Document 1 and Patent Document 2).

### [Patent Document 1]

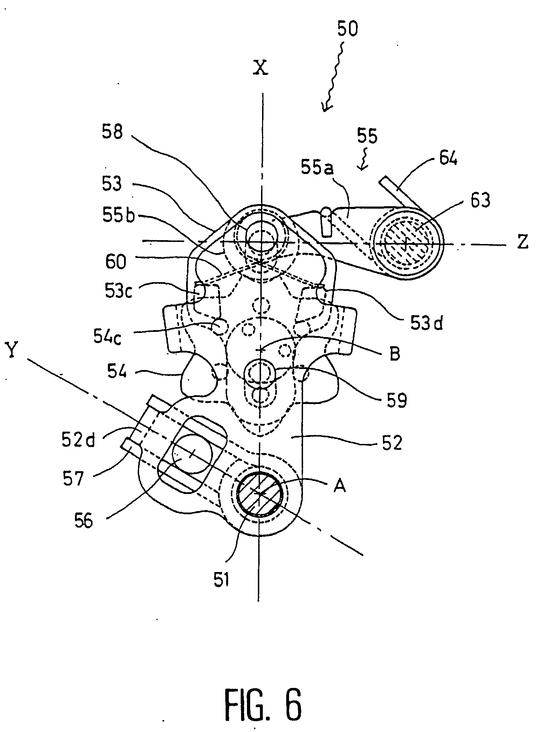

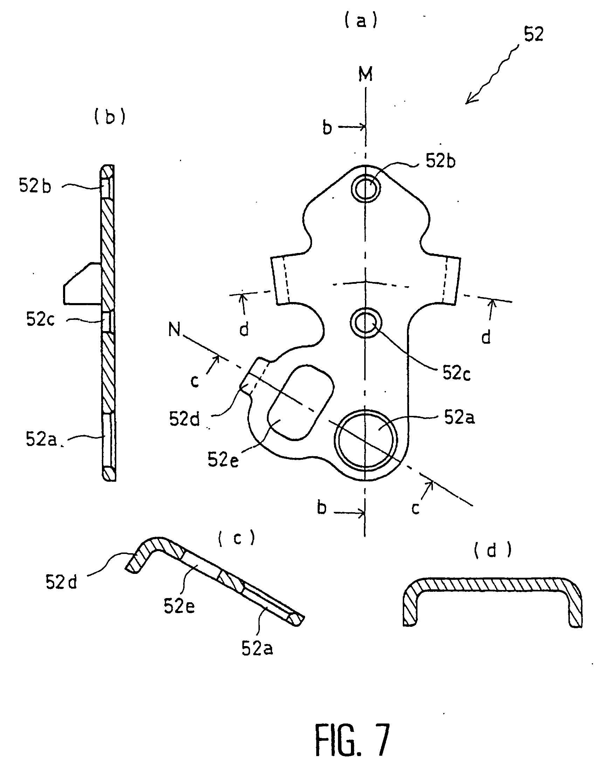

JP-A-11-82734 (See Fig. 6 and Fig. 7)

### [Patent Document 2]

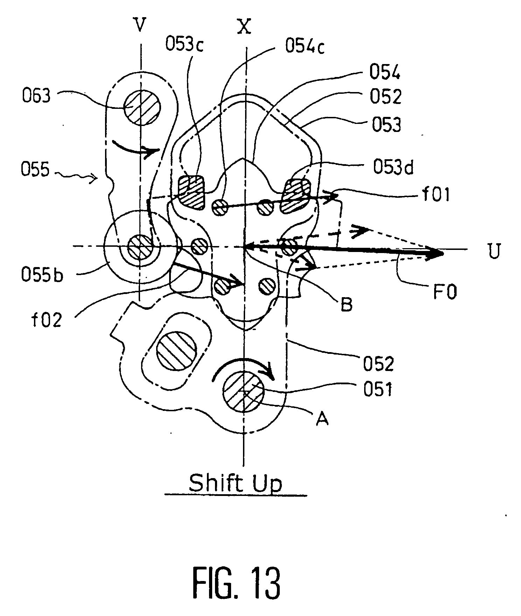

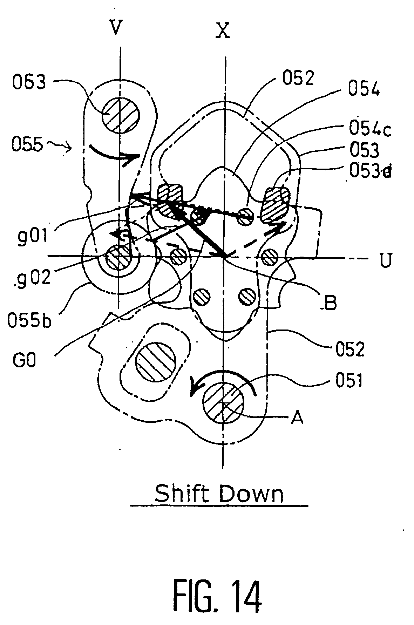

EP-A-1090797 (See Fig. 6 and Fig. 7) discloses a variable speed gear with the features of the preamble of claim 1.
Taking a typical gear change mechanism in the related art as an example, how a force works when the gear change mechanism in the related art is operated will be described. Fig. 13 and Fig. 14 are simplified drawings of the gear change mechanism in the related art, showing a force generated in the same mechanism. Fig. 13 is a drawing showing upshifting operation, and Fig. 14 is a drawing showing downshifting operation. Except for a mounting position for mounting a stopper roller assembly, the construction of the device shown in the figures is the same as that of the present invention. Therefore, description of the construction will not be made here.

In the figure, reference numeral 051 designates a change spindle, reference sign A designates the center of rotation of the change spindle 051, reference sign B designates the center of rotation of a shift drum, not shown, a line X designates a reference line connecting the center of rotation A of the change spindle and the rotation B of the shift drum, reference numeral 052 designates a change arm fixed to the aforementioned change spindle by welding and rotating with the change spindle. When change gear operation is not being made, longitudinal centerline of the change arm 052 coincides with the aforementioned reference line X. Reference numeral 053 designates a shifter plate supported by the change arm 052 by a guide pin inserted into an elongated hole, not shown, so as to be capable of moving along the centerline of the change arm 052. Reference numeral 054 designates a star plate fixed to an end of the shift drum, not shown, and aligned at the center thereof with the center of rotation B of the shift drum. A plurality of feed pins 054c are provided on the aforementioned star plate 054. A pair of feed projections 053c and 053d are provided symmetrically with respect to the centerline on the aforementioned shifter plate 053. When the change spindle 051 is rotated by change gear operation, the change arm 052 is rotated in one of the left and right direction, and correspondingly, the shifter plate 053 rotates, so that one of these feed projections 053c and 053d pushes one of the feed pins 054c of the aforementioned start plate 054.

In the figure, a line U passes through the center of rotation
B of the shift drum and runs at right angles to the aforementioned reference line X. Reference numeral 055 designates a stopper roller assembly. The center of rotation of the stopper roller 055b located at its extremity thereof is located on the aforementioned line U. The stopper roller assembly abuts against a recess on the outer periphery of the star plate when change gear operation is not being made. A line V passes through the center of rotation of the aforementioned stopper roller, and runs at right angles to the aforementioned line U. A shaft 063 at the distal end of the stopper roller assembly 055 is provided on the aforementioned line V, and the stopper roller assembly 055 is supported by the same shaft 063 so as to be capable of rotation about the shaft 063. The stopper roller 055b is urged toward the center' of rotation B of the shift drum by a helical coil spring, not shown, attached on the aforementioned shaft 063. When change gear operation is not made, the stopper roller 055b is fitted into one of the recesses on the outer periphery of the star plate and maintains the position of the star plate 054 and the shift drum stably.

When upshifting operation is made, in Fig. 13, the change arm 052 is moved in conjunction with rotation of the change spindle 051 toward the direction shown by a curved arrow in the figure, and the feed projection 053c presses one of the feed pins 054c and exerts a force f01 thereon. At this moment, the star plate 054 rotates, and the stopper roller 055b abuts against one of the projections 054a on the outer periphery and exerts a force f02 thereon. A resultant force obtained by moving the aforementioned forces f01 and f02 in parallel toward the center of rotation B of the shift drum is F0. This is a force to be exerted on the rotating and sliding portion of the shift drum 9 during upshifting operation, and a frictional resistance corresponding to this force is generated at the rotating and sliding portion, which is a shifting load generated during upshifting operation.

When downshifting operation is made, in Fig. 14, the change arm 052 is moved in conjunction with rotation of the change spindle 051 in the direction shown by a curved arrow in the figure, and the feed projection 053d presses one of the feed pin 054c and exerts a force g01. At this moment, the star plate 054 rotates, and the stopper roller 055b abuts against one of the projections 054a on the outer periphery and exerts a force g02. A resultant force obtained by moving the aforementioned forces g01 and g02 in parallel toward the center of rotation B of the shift drum is G0. This is a force to be exerted on the rotating and sliding portion of the shift drum 9 during downshifting operation, and a frictional resistance corresponding to this force generates at the rotating and sliding portion, which is a shifting load generated during downshifting operation.

When the aforementioned resultant forces F0 and G0 are compared in the figure, it is clear that their magnitudes are significantly different. This difference is the difference of the shifting loads between upshifting operation and downshifting operation, which is a cause that has been giving the driver a sense of discomfort. This is because the stopper roller is provided on the line U that passes through the center of rotation of the shift drum and runs at right angles to the axis X, and is urged toward the center or rotation B of the shift drum, which enhances a force exerted on the shift drum by the feed projection 53c during upshifting operation and cancels a force exerted on the shift drum by the feed projection 53d during downshifting operation.

In the description of the related art above, the line X, the line U, and the line V are orthogonal with respect to each other, and the direction that the stopper roller is urged is the direction toward the center of rotation B of the shift drum for the sake of simplification of description. However, in general, the results of the study described above are almost true as far as the line X, the line U and the line V runs almost at right angles to each other, and the stopper roller is urged almost toward the center of rotation B.

### [Problems to be Solved by the Invention]

Solving the aforementioned disadvantages in the related art, the present invention intends to eliminate the usage of the ball bearing at the position where the shift drum is rotatably supported by equalizing the load generated during upshifting operation and the load generated during downshifting operation so that the sense of discomfort of the driver is eliminated.

### [Means for Solving the Problems and Advantages]

The present invention contributes to solve the aforementioned problems, and the invention according to Claim 1 is a variable speed gear for an internal combustion engine in which change gear operation is performed by rotating a star plate fixed to a shift drum by rotating a change spindle and a stopper roller is pressed against and engaged with a recess on the outer periphery of the aforementioned star plate, characterized in that the center of rotation of the aforementioned stopper roller is disposed on a straight line connecting the center of rotation of the aforementioned change spindle and the center of rotation of the aforementioned shift drum, and a pressing force toward the center of rotation of the aforementioned shift drum is exerted on the stopper roller.

Since the present invention is constructed as described above, the load generated during upshifting operation and the load generated during downshifting operation in change gear operation are equalized, and thus the driver does not feel a sense of discomfort during operation, thereby eliminating necessity of usage of a bearing for supporting the shift drum.

### [Brief Description of the Drawings]

[Fig. 1]

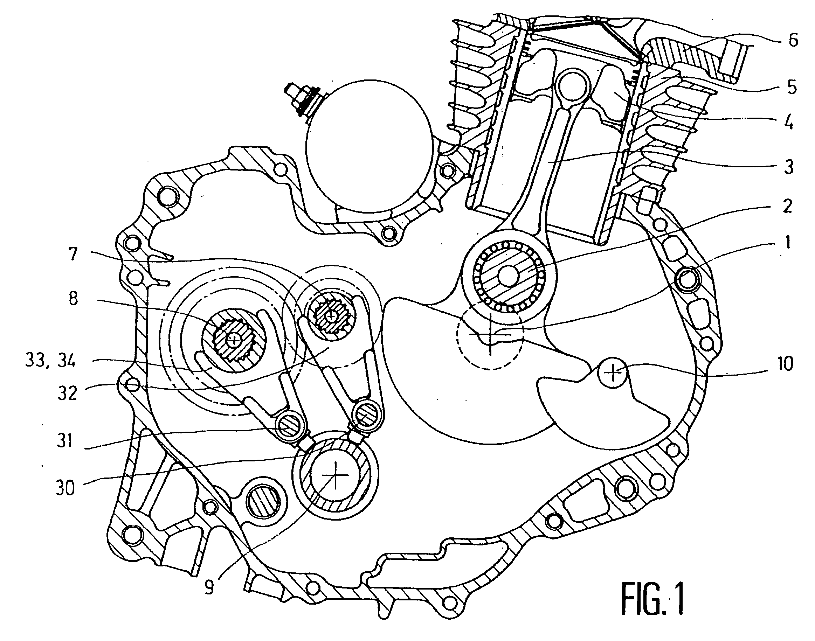

   Fig. 1 is a cross sectional view of a principal portion of a air-cooled internal combustion engine for a motorcycle according to the present invention taken along a plane extending in the fore-and-aft direction, viewed from the right.
[Fig. 2]

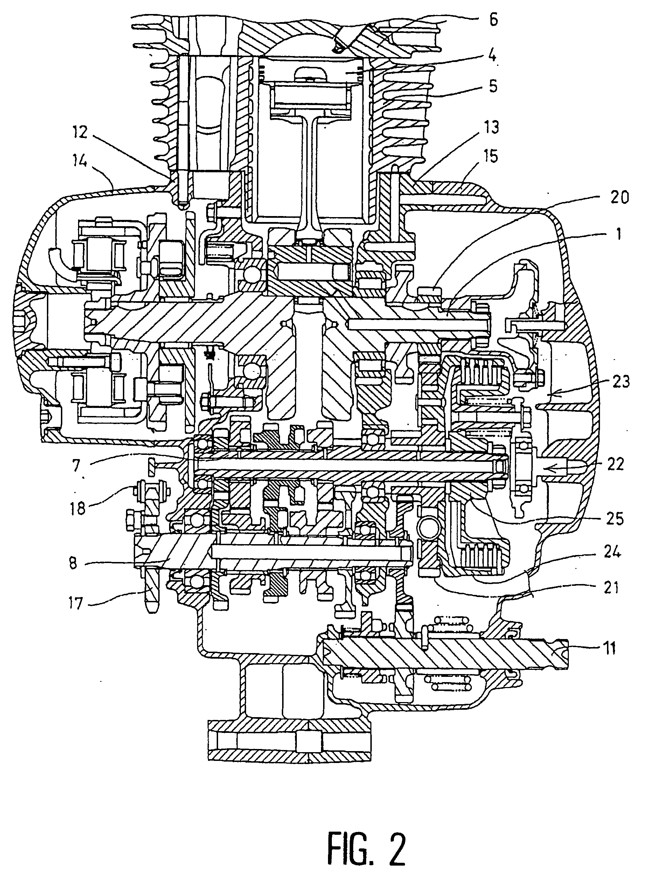

   Fig. 2 is a cross sectional view of the principal portion of the aforementioned internal combustion engine along a lateral plane passing through the piston, the crankshaft, the main shaft, the countershaft and a kick starter shaft, viewed from the rear.
[Fig. 3]

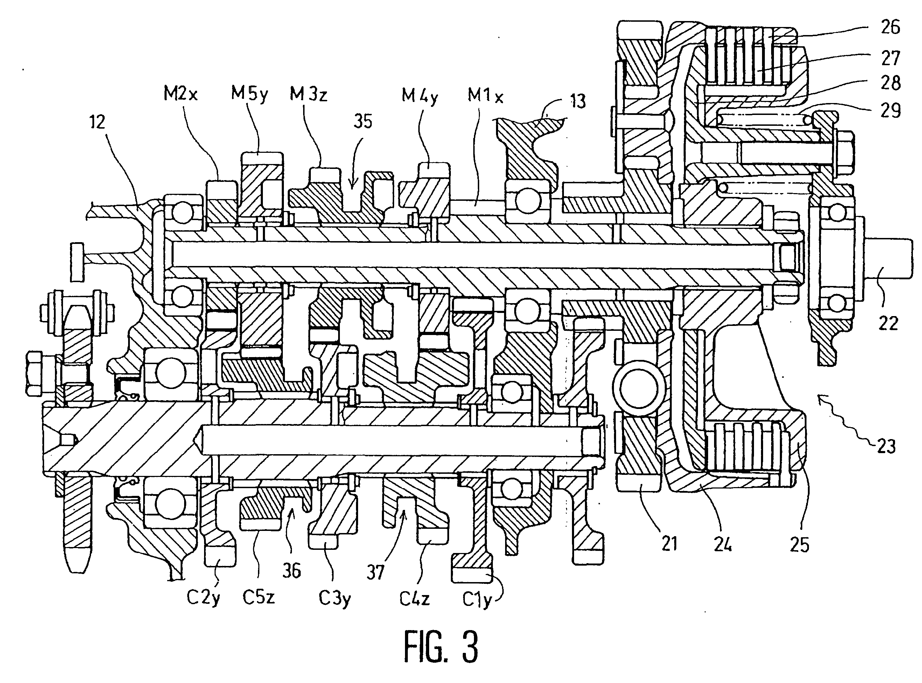

   Fig. 3 is an enlarged view showing an arrangement of the multiplate clutch provided on the aforementioned main shaft and the countershaft and gears.
[Fig. 4]

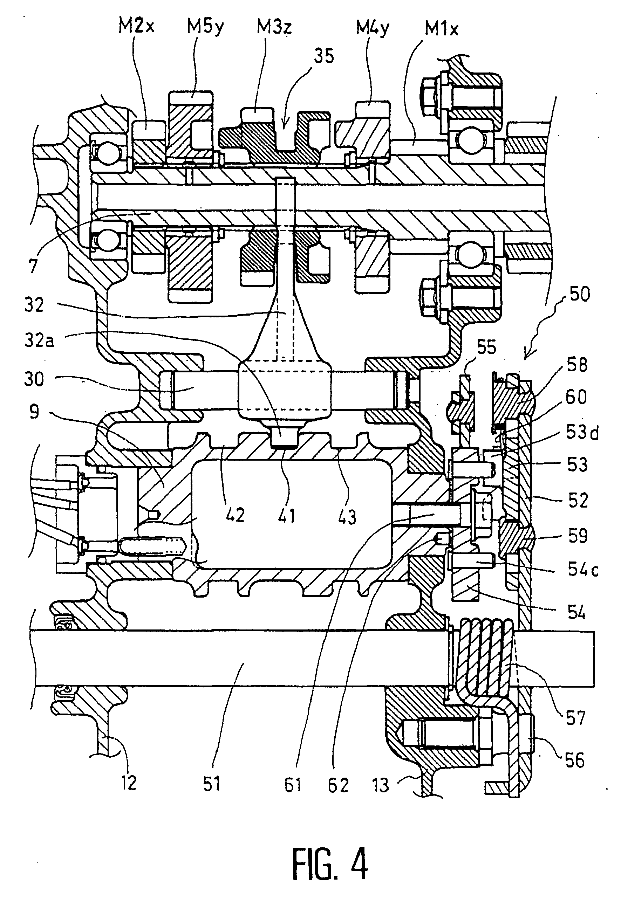

   Fig. 4 is a cross sectional view of the principal portion of the aforementioned internal combustion engine taken along a lateral plane passing through the main shaft, the first fork shaft, the shift drum, and the change spindle, viewed from the rear.
[Fig. 5]

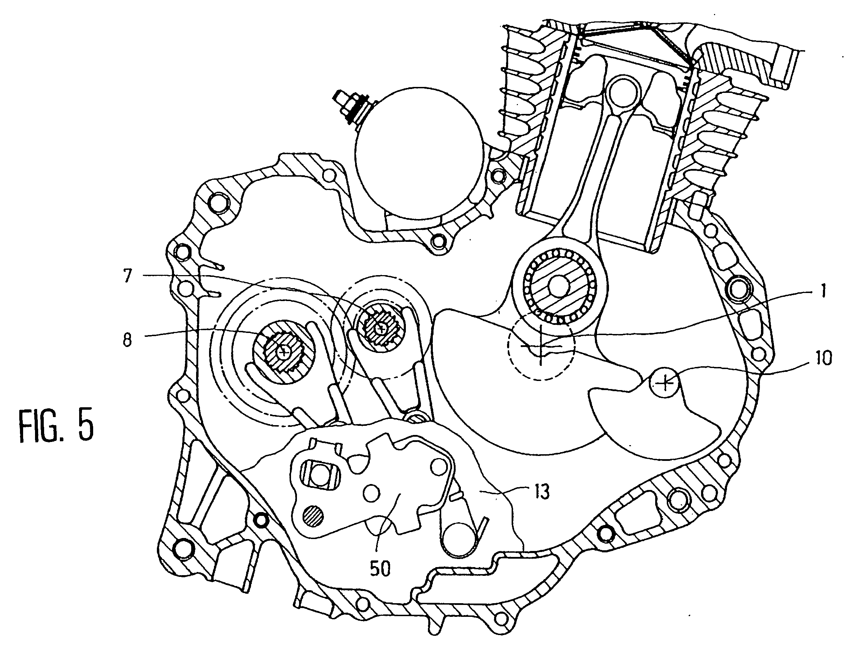

   Fig. 5 is a drawing showing the position of the gear change mechanism provided on the right side of a right crankcase, viewed into the interior of the aforementioned internal combustion engine from the right side.
[Fig. 6]
   Fig. 6 is a front view of the gear change mechanism (when viewed from the right side in the state of being mounted on the vehicle).
[Fig. 7]
   Fig. 7 is a front view and a cross sectional view of the change arm, which is a component of the gear change mechanism.
[Fig. 8]

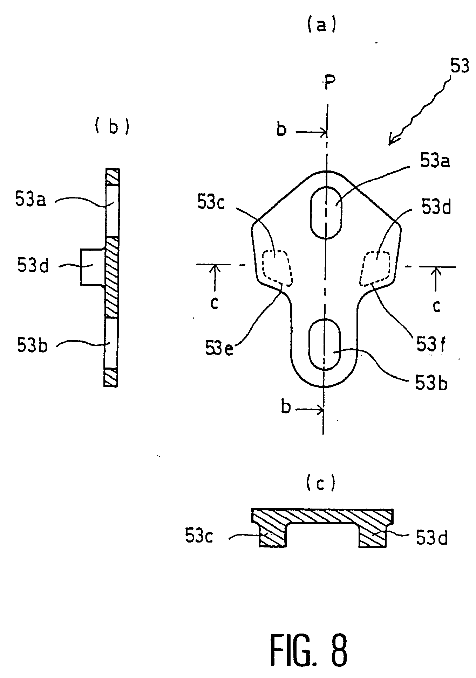

   Fig. 8 is a front view and a cross sectional view of the shifter plate, which is a component of the gear change mechanism.
[Fig. 9]

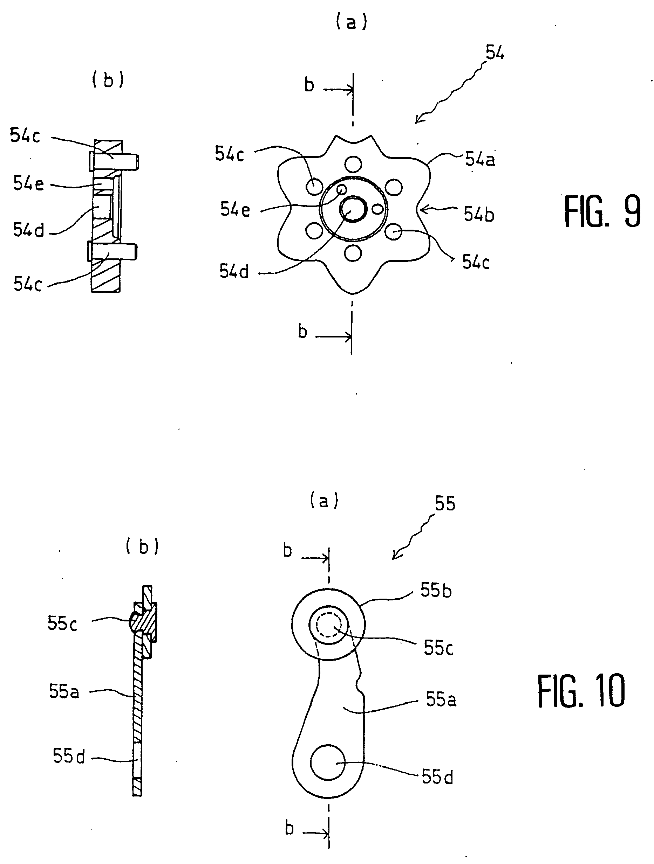

   Fig. 9 is a front view and a cross sectional view of the star plate, which is a component of the gear change mechanism.
[Fig. 10]
   Fig. 10 is a front view and a cross sectional view of the stopper roller assembly, which is a component of the gear change mechanism.
[Fig. 11]

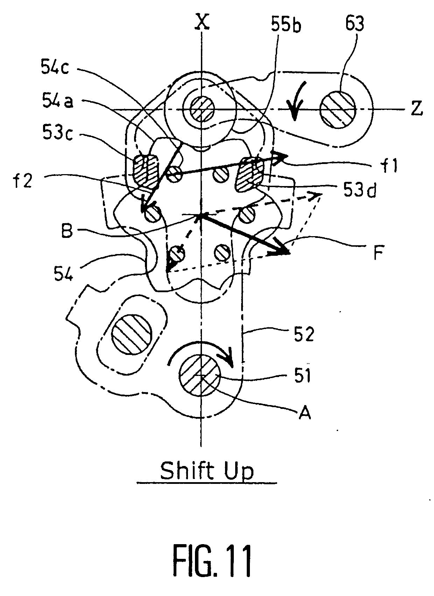

   Fig. 11 is a drawing showing a force generated during upshifting operation in the gear change mechanism.
[Fig. 12]

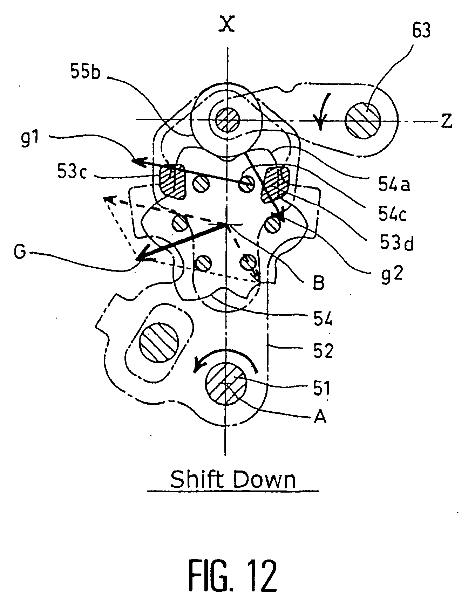

   Fig. 12 is a drawing showing a force generated during downshifting operation in the gear change mechanism.
[Fig. 13]
   Fig. 13 is a structure of the gear change in the related art shown in a simplified manner, showing a force generated during upshifting operation.
[Fig. 14]
   Fig. 14 shows a structure of the gear change in the related art shown in a simplified manner, showing a force generated during downshifting operation.

### [Mode for Carrying Out the Invention and Advantages]

Fig. 1 is a cross sectional view of a principal portion of a air-cooled internal combustion engine for a motorcycle according to the present invention taken along a plane extending in the fore-and-aft direction, viewed from the right, in which the right side of the figure corresponds to the front. In this figure, reference numeral 1 designates a crankshaft, reference numeral 2 designates a crankpin of the same crankshaft, reference numeral 3 designates a connecting rod continuing from the same crankpin 2, numeral 4 designates a piston continuing to the connecting rod 3, which moves upward and downward in a cylinder block 5. A cylinder head 6 is connected to the top of the cylinder block 5. Reference numeral 7 designates a main shaft of a transmission provided next to the aforementioned crankshaft 1, numeral 8 designates a countershaft of the transmission provided nest thereto. Reference numeral 9 designates a shift drum, and numeral 10 designates a balancer shaft.

Fig. 2 is a cross sectional view of the principal portion of the aforementioned internal combustion engine along a lateral plane passing through the piston 4, the crankshaft 1, the main shaft 7, the countershaft 8 and a kick starter shaft 11, viewed from the rear. A casing of the internal combustion engine includes a left crankcase 12, a right crankcase 13, a left cover 14, and a right cover 15, and the cylinder block 5, the cylinder head 6, and a cylinder head cover (not shown) are connected to the upper center thereof. The crankshaft 1, the main shaft 7, and the countershaft 8 are rotatably supported by the left crankcase 12 and the right crankcase 13 via bearings respectively. The kick starter shaft 11 is rotatably supported by the right crankcase 13 and the right cover 15. The countershaft 8 is a output shaft of the internal combustion engine, and a drive sprocket 17 is provided on the extension thereof projecting outward from the left crankcase 12, whereby the rear wheel of the motorcycle is driven via a chain 18.

In Fig. 2, a drive gear 20 is fixed to the portion near the right end of the crankshaft 1, and a driven gear 21, which is constantly engaging the aforementioned drive gear 20 so as to be capable of rotating with respect thereto circumferentially of the shaft, is fitted to the portion near the right end of the main shaft 7. A multiplate clutch 23 , which is engaged constantly and is released when an operating mechanism 22 is operated, is provided on the right end of the main shaft 7, and a clutch outer 24 thereof is fixed to the aforementioned driven gear 21, and a clutch inner 25 thereof is fixed to the main shaft 7. Rotation of the crankshaft 1 is transmitted to the driven gear 21 via the drive gear 20, and is transmitted to the main shaft 7 via the multiplate clutch 23.

Fig. 3 is an enlarged view showing an arrangement of the multiplate clutch 23 provided on the main shaft 7 and the countershaft 8 and a gear train. A plurality of outer friction plates 26 a plurality of inner friction plates 27 are held on the clutch outer 24 and the clutch inner 25 respectively so as to be capable of moving in the axial direction, and disposed in the state of being overlapped alternately. The clutch inner 25 is provided with a pressure plate 28 mounted thereon, and the clutch inner 25 and the pressure plate 28 interpose the aforementioned plurality of friction plates 26 and 27 by a resilient force of a coil spring 29 to generate a frictional force. In order to disconnect the clutch, a force is exerted to the operating mechanism 22 to raise the pressure plate 28 against the force of the coil spring 29. The operating mechanism 22 is operated manually via a mechanism mounted to a handle of the vehicle.

In Fig. 3, five gears M1-M5 are provided on the main shaft 7, and on the counter shaft 8 at the positions corresponding thereto, five gears C1-C5, which engage the aforementioned M1 to M5 constantly, are provided. Reference sign M represents a gear provided on the main shaft, and reference sign C represents a gear provided on the countershaft. Numerals 1 to 5 represent gears having numbers of teeth for power transmission corresponding to the first gear to the fifth gear, respectively.

These ten gears may be divided into three characteristics.
x: gears secured to the shaft
y: gears held by sliding bearings and being capable of relative rotation circumferentially of the shafts, but not capable of moving in the axial direction
z: gears spline-fitted to the shafts and being capable of axial movement but not capable of relative rotation circumferentially of the shafts.

In the following description, the reference signs (M, C) which represents the shaft on which the gears are attached, the numerals (1-5) representing n^{th} gear of transmission, and reference signs (x, y, z) representing characteristics of the gears are expressed in combination. The gears are arranged on the shafts from left to right in the following order.
Main shaft: M2x, M5y, M3z, M4y, M1x
Counter shaft: C2y, C5z, C3y, C4z, C1y

Since the gears attached with the letter "y" out of the aforementioned gears are capable of relative rotation in the circumferential direction, they cannot transmit a power by themselves. On the other hand, the gears attached with the letter "z" are capable of axial movement, and constitutes a dog clutch, so as to be moved in the axial direction by a shift fork being in constant engagement therewith, which will be described later, and engaged with the adjacent gears, which are capable of relative rotation in the circumferential direction, attached with the letter "y" to fix those gears on to the shaft. At this moment, teeth on the gears attached with the letter "z" do not contribute to power transmission by themselves. The gears attached with the letter "z" transmit power in accordance with the number of teeth thereof only when they are at the original neutral position. When one of three axially movable gears attached with the letter "z" moves in the axial direction, remaining two gears are held at the neutral positions.

The following five shift transmissions are possible depending on the power transmission paths formed by combining the aforementioned gears. Arrows represents the power transmission paths, and parentheses represents that two gears contained therein are in engagement as the dog clutch. first gear: main shaft → M1x → (C1y → C4z ) → counter shaft second gear: main shaft → M2x → (C2y → C5z) → counter shaft third gear: main shaft → M3z → (C3y → C4z) → counter shaft fourth gear: main shaft → (M3z → M4y) → C4z → counter shaft fifth gear: main shaft (M3z → M5y) → C5z → counter shaft

In Fig. 1, a first fork shaft 30 is provided near the main shaft 7, and a second fork shaft 31 is provided near the counter shaft 8. A first shift fork 32 is fitted to the first fork shaft 30, and a second shift fork 33 and a third shift fork 34 are fitted to the second fork shaft 31, so as to be capable of sliding in the axial direction. In Fig. 1, the second shift fork 33 and the third shift fork 34 are overlapped.

The fork end of the first shift fork 32 engages a circumferential groove 35 of the gear M3z shown in Fig. 3, the fork end of the second shift fork 33 engages a circumferential groove 36 of the gear C5z, and the fork end of the third shift fork 34 engages a circumferential groove 37 of the gear C4z. The shift drum 9 is, as shown in Fig. 1, provided at the position in the vicinity of both of the first fork shaft 30 and the second fork shaft 31, and is formed with three shift cam grooves based on a predetermined shift patterns on the surface thereof, so that the sliding pins formed on the boss members of the respective shift forks are fitted into the corresponding shift cam grooves.

Fig. 4 is a cross sectional view of the principal portion of the aforementioned internal combustion engine taken along a lateral plane passing through the main-shaft 7, the first fork shaft 30, the shift drum 9, and a change spindle 51, viewed from the rear. In the figure, a state in which the fork end of the first shift fork 32 engages the circumferential groove 35 of the gear M3z provided on the main shaft 7 is shown. There are shown a first cam groove 41, a second cam groove 42, and a third cam groove 43 on the shift drum 9 in a state in which the sliding pin 32a of the first shift fork 32 engages the first cam groove 41. The second cam groove 42 and the third cam groove 43 are grooves that the sliding pins of the second shift fork 33 and the third shift fork 34 engage. The engaging state of the second and the third shift fork with the circumferential groove of the axially movable gear and the cam groove of the shift drum are almost the same as those shown in Fig. 4, and thus will not be shown in the figure.

One of the aforementioned first, second, and third shift forks moves axially of the fork by the action of the cam groove caused by rotation of the shift drum 9. Accordingly, one of the axially movable gears (M3z, C5z, C4z) that the shift fork engages moves. Three gears including the aforementioned gear, a gear that the aforementioned one of the axially movable gears engages, and a gear provided on the other shaft, which engages thereto, change gears in accordance with the number of teeth of the gears in engagement. The aforementioned shift drum 9 is, as shown in Fig. 4, rotated by a gear change mechanism 50 provided on the right side of the right crankcase. Fig. 5 is a drawing showing the position of the aforementioned gear change mechanism 50 in the internal combustion engine, showing the inside of the internal combustion engine viewed from the right side.

Fig. 6 is a front view of the gear change mechanism 50 (when viewed from the right side in the state of being mounted on the vehicle). The main members of the gear change mechanism 50 are, as shown in Fig. 4 and Fig. 6, the change spindle 51 rotatably supported by the left crankcase 12 and the right crankcase 13, a change arm 52 fixed to the change spindle 51 by welding for rotating with the change spindle 51, a shifter plate 53 supported by the change arm 52, a star plate 54 fixed to the right end surface of the shift drum 9, and a stopper roller assembly 55. A front view and a cross sectional view' of the change arm 52, the shifter plate 53, the star plate 54, and the stopper roller assembly 55 are shown in Fig. 7, Fig. 8, Fig. 9, and Fig. 10, respectively.

In Fig. 7, the change arm 52 is formed with a change spindle insertion hole 52a, and is formed with projections and recesses around the outer periphery and openings so as to be symmetrical with respect to centerlines M and N extending in two directions from the center of the insertion hole forming a narrow angle of 60° except for the portion around the change spindle insertion hole 52a. Guide pin insertion holes 52b and 52c are formed on the centerline M, and a spring bearing 52d and opening 52e are formed on the centerline N.

In Fig. 8, the shifter plate 53 is a laterally symmetrical member, and elongated holes 53a and 53b are formed on the centerline P thereof. On the backside of the shifter plate 53, feed projections 53c and 53d are formed at the position symmetrical with respect to the centerline P, and cams 53e and 53f are formed on one side of the feed projection.

The shifter plate 53 is held by the change arm 52 via guide pins 58 and 59 with the centerline P thereof aligned with the centerline M of the change arm 52 (Fig. 7) as shown in Fig. 4. The guide pins 58 and 59 are loosely inserted into the elongated holes 53a and 53b (Fig. 8) of the shifter plate 53, and inserted into the guide pin insertion holes 52b and 52c (Fig. 7) of the change arm 52, and then caulked there. Accordingly, the shifter plate 53 is capable of sliding movement in the direction of centerline M (Fig. 7) of the change arm 52. A shifter plate urging spring 60 (Fig . 6 and Fig. 4) having two legs are mounted to the guide pin 58, and the two legs presses the shifter plate 53 toward the change spindle 51 by pressing the feed projections 53c and 53d.

In Fig. 9, the star plate 54 is formed with peripheral projections 54a on the outer periphery thereof and peripheral recesses 54b therebetween. A plurality of projecting feed pins 54c are press-fitted on the flat portion thereof. A mounting bolt insertion hole 54d is formed at the center thereof and a whirl-stop pin insertion hole 54e is formed in the vicinity thereof.

The star plate 54 is, as shown in Fig. 4, fixed to the end of the shift drum 9 by a mounting bolt 61 and a whirl-stop pin 62 inserted into the aforementioned insertion holes 54d and 54e. Fig. 6 shows the position of the center of rotation B of the shift drum 9, though the shift drum 9 itself is not shown. The position of the center of the star plate 54 coincides with the position of the center of rotation B of the shift drum 9.

In Fig. 6, a regulating bolt 56 is provided and fixed on the right crankcase 13 at the position on a reference line Y at an angle of 60° from a reference line X connecting the center of rotation A of the change spindle 51 and the center of rotation B of the shift drum.

In Fig. 6, the change arm 52 to which the shifter plate 53 is assembled is mounted with the centerlines M and N thereof overlapped on the aforementioned reference lines X and Y. The change spindle 51 is inserted into the change spindle insertion hole 52a of the change arm 52, and the regulating bolt 56 is inserted into the center of the opening 52e of the change arm 52. The change spindle 51 and the peripheral portion of the change spindle insertion hole 52a are welded with the respective members described above are positioned as described above with respect to each other. In the above-described state, any one of the plurality of feed pins 54c of the star plate 54 is positioned between the pair of feed projections 53c and 53d of the aforementioned shifter plate 53. The drawing of the gear change mechanism 50 in Fig. 4 is a drawing shown by deploying the cross sections of the gear change mechanism 50 in Fig. 6 taken along the planes along the reference lines X and Y at the position of the center of rotation A of the change spindle 51 into a linear state.

A change arm restoring spring 57 is mounted on the outer periphery of the change spindle 51 (Fig. 4 and Fig. 6). Two legs extending from the change arm restoring spring 57 interpose the spring bearing 52d (Fig. 7) at the end of the change arm 52 and the aforementioned regulating bolt 56. Accordingly, in Fig. 6, the regulating bolt 56 is positioned at the center of the opening 52e. The position of the change arm 52 at this moment is the position in a state in which change gear operation is not made, that is, a reference position. The change arm 52 rotate rightward and leftward from the reference position.

When the change arm 52 is rotated in association with rotation of the change spindle 51, the legs of the change arm restoring spring 57 is push-opened by the spring bearing 52d and the regulating bolt 56 and rotates to a predetermined angle. Subsequently, when a force to rotate is evanished, the change arm 52 returns to the aforementioned reference position by a resilient force of the change arm restoring spring 57.

In Fig. 10, the stopper roller assembly 55 includes an arm 55a, a stopper roller 55b, and a roller shaft 55c for mounting the stopper roller 55b to the arm 55a. The roller shaft 55c is loosely inserted into a center hole of the stopper roller 55b, and inserted into the mounting hole at the distal end of the arm 55a, and then caulked and fixed there. A shaft insertion hole 55d is formed at the proximal end of the arm 55a.

The stopper roller 55b is, as shown in Fig. 6, provided at the position to be fitted into the peripheral recess 54b (Fig. 9) of the star plate 54 on the reference line X when change gear operation is not being made. The shaft 63 for rotatably supporting the stopper roller assembly 55 passes through the center of the stopper roller at the position described above, and disposed on a line Z, which extends at right angles to the reference line X, and the fixed to the right crankcase 13. The stopper roller 55b is urged toward the center of rotation B of the shift drum by the stopper roller urging spring 64 mounted on the shaft 63 and set between the right crankcase 13 and the arm 55a, and pressed against the outer periphery of the star plate 54.

The gear change mechanism 50 is constructed as described above. The change spindle 51 is rotated by a driver of the vehicle with a change pedal, not shown. By rotating of the change arm 52 in either normal or reverse direction in accordance with the rotation of the change spindle 51 in the normal direction or in the reverse direction, one of the pair of feed projections 53c and 53d of the shifter plate 53 engages one of the feed pins 54c of the star'plate 54 to rotate the star plate 54, thereby rotating the shift drum 9 on which the star plate 54 is attached. When a force to rotate the change spindle 51 is reduced to zero, one of the feed pins 54c of the star plate 54 abuts against one of the cams 53e and 53f formed on the feed projections 53c and 53d of the shifter plate 53 when the change arm 52 is restored to the reference position by the resilient force of the change arm restoring spring 57. Accordingly, the shifter plate 53 moves away from the change spindle 51 against the urging force of the shifter plate urging spring 60, and one of the aforementioned feed projections 53c and 53d get over one of the feed pins 54c. The star plate 54 rotates by 60° as one step. The position of the star plate 54 before and after rotation is held stably by the stopper roller 55b by being fitted into one of the peripheral recesses 54b of the star plate by an urging force of the stopper roller urging spring 64.

Both of Fig. 11 and Fig. 12 shows the gear change mechanism according to the aforementioned embodiment in a simplified state, and shows a force generating in the same mechanism. Fig. 11 is a drawing showing a state during upshifting operation, and Fig. 12 is a drawing showing a state during downshifting operation.

When upshifting operation is made, in Fig. 11, the change arm 52 is moved in conjunction with the rotation of the change spindle 51 in the direction shown by a curved arrow in the figure, and the feed projection 53c presses one of the feed pins 54c to provide a force f1. At this moment, the star plate 54 rotates and the stopper roller 55b abuts against one of the peripheral projections 54a to provide a force f2. The resultant force obtained by moving the aforementioned forces f1 and f2 in parallel toward the center of rotation B of the shift drum is F. This is a force exerted on the rotating and sliding portion of the shift drum 9 during upshifting operation, and a frictional resistance corresponding to this force generates at the rotating and sliding portion, which results in a shifting load during upshifting operation.

When downshifting operation is made, in Fig. 12, the change arm 52 is moved in conjunction with rotation of the change spindle 51 in the direction shown by a curved arrow in the figure, and the feed projection 53d presses one of the feed pins 54c to provide a force g1. At this moment, the start plate 54 rotates, and the stopper roller 55b abuts against one of the peripheral projections 54a to provide a force g2. The resultant force obtained by moving the aforementioned forces g1 and g2 in parallel toward the center of rotation B of the shift drum is G. This is the force exerted to the rotating and sliding portion of the shift drum 9 during downshifting operation, and a frictional resistance corresponding to this force generates at the rotating and sliding portion, which results in a shifting load during downshifting operation.

When the aforementioned resultant forces F and G are compared in the figure, it is clear that their magnitudes are not much different. This is because the center of rotation of the stopper roller 55b resides on the reference line X and the force of the stopper roller urging spring 64 exerted on the stopper roller 55b directs toward the center of rotation B of the shift drum, and thus equal actions are exerted on the star plate 54 in either cases of upshifting and downshifting.

In the description above, the line X and the line Z are orthogonal with respect to each other, and the direction that the stopper roller is urged is the direction toward the center of rotation B of the shift drum for the sake of simplification of description. However, in general, the results of the study described above are almost true as far as the line X and the line Z runs almost at right angles to each other, and the stopper roller is urged almost toward the center of rotation B.

As described thus far, according to the present invention, the center of rotation of the stopper roller is disposed on the straight line X connecting the center of rotation A of the change spindle and the center of rotation B of the shift drum, and a pressing force toward the center of rotation B of the aforementioned shift drum is exerted on the stopper roller. Therefore, the moments required for rotating the change spindle during upshifting operation and during downshifting operation are the same and thus shifting load that the driver of the vehicle feels during upshifting operation and downshifting operation are also the same. Therefore, a sense of discomfort during change gear operation may be eliminated. In addition, since necessity to provide a ball bearing at the portion for supporting rotation of the shift drum is eliminated; the cost is reduced.

## Claims

1. A variable speed gear for an internal combustion engine in which change gear operation is performed by rotating a star plate (54) fixed to a shift drum (9) by rotating a change spindle (51) and a stopper roller (55b) is pressed against and engaged with a recess (54b) on the outer periphery of said star plate (54) wherein a pressing force toward the center of rotation (B) of said shift drum (9) is exerted on the stopper roller (55b),
**characterized in that** the center of rotation of said stopper roller is disposed on a straight line (X) connecting the center of rotation (A) of said change spindle and the center of rotation (B) of said shift drum (9).

## Revendications

1. Variateur de vitesse pour un moteur à combustion dans lequel l'opération de changement de vitesse se fait en faisant tourner un croisillon porte-satellites (54) fixé à un tambour de changement de vitesse (9) en faisant tourner un doigt de changement de vitesse (51) et un galet de butée (55b) est pressé contre et s'engage dans un creux (54b) sur la périphérie extérieure dudit croisillon porte-satellites (54), dans lequel une force d'appui en direction du centre de rotation (B) dudit tambour de changement de vitesse (9) est exercée sur le galet de butée (55b), **caractérisé en ce que** le centre de rotation dudit galet de butée est disposé sur une ligne droite (X) reliant le centre de rotation (A) dudit doigt de changement de vitesse et le centre de rotation (B) dudit tambour de changement de vitesse (9).

## Patentansprüche

1. Regelgetriebe für einen Verbrennungsmotor, in welchem ein Vorgang eines Gangwechsels vollzogen wird, indem eine an einen Schaltzylinder (9) fixierte sternförmige Platte (54) rotiert wird, indem eine Wechselspindel (51) rotiert wird, und eine Stopper-Rolle (55b) gegen eine Aussparung (54b) auf dem äußeren Umfang der sternförmigen Platte (54) gepresst wird und dort eingreift, wobei ein Anpressdruck in Richtung auf den Drehpunkt (B) des Schaltzylinders (9) auf die Stopper-Rolle (55b) ausgeübt wird,
**dadurch gekennzeichnet, dass** der Drehpunkt der Stopper-Rolle (55b) auf einer Geraden (X) liegt, die den Drehpunkt (A) der Wechselspindel (51) mit dem Drehpunkt (B) des Schaltzylinders (9) verbindet.
